# EUROPÄISCHE PATENTSCHRIFT

(11) **EP 0 902 246 B1**
(45) Veröffentlichungstag und Bekanntmachung des Hinweises auf die Patenterteilung: **16.10.2002**
(21) Anmeldenummer: 98810858.5
(22) Anmeldetag: 31.08.1998
(51) Int. Cl.: F28C 1/14, F28F 27/00

(54) **Verfahren zum Betrieb eines Nass-Trocken-Kühlturmes**
Operating method for a dry / wet cooling tower
Procédé de fonctionnement d'une tour de refroidissement sèche / humide

(30) Priorität: 11.09.1997 DE 19739726
(43) Veröffentlichungstag der Anmeldung: 17.03.1999
(73) Patentinhaber: Alstom, 75116 Paris (FR)
(72) Erfinder: Fischer, Kurt, 5507 Mellingen (CH); Liebig, Erhard, Dr., 79725 Laufenburg (DE); Schütz, Walter, 4654 Lostorf (CH); Stirnimann, Franz, 8800 Thalwil (CH)
(74) Vertreter: Liebe, Rainer

(56) Entgegenhaltungen:
- DE-A- 1 812 111
- DE-A- 2 421 067
- ZIMMERMANN P ET AL: "PLANUNG UND BAU EINES SCHWADENFREIEN UND GERAEUSCHARMEN HYBRIDKUEHLTURMES MIT EINER UMWELTSCHONENDEN WASSERBEHANDLUNG DURCHOZON FUER EIN GUD-KRAFTWERK IN DEN NIEDERLANDEN" VGB KRAFTWERKSTECHNIK,DE,VGB KRAFTWERKSTECHNIK GMBH. ESSEN, Bd. 76, Nr. 6, 1. Juni 1996 (1996-06-01), Seiten 502-505, XP000590176 ISSN: 0372-5715

## Beschreibung

### Technisches Gebiet

Die Erfindung betrifft ein Verfahren zum Betrieb eines auf eine bestimmte Last bei vorgegebenen klimatischen Randbedingungen ausgelegten Nass-Trocken-Kühlturmes mit einer zumindestens teilweisen wasserseitigen Reihenschaltung von Trockenteil und Nassteil, d.h. mit reiner Reihenschaltung oder kombinierter Reihen- und Parallelschaltung, bei von dieser Auslegungslast abweichenden Betriebsbedingungen, insbesondere bei Dampfturbinenbypass-, Überlast- und Teillastfahrweise, zwecks Einhaltung der Schwadenfreiheit.

### Stand der Technik

Nass-Trocken-Kühltürme, auch als Hybridkühltürme bezeichnet, werden in Energieversorgungsunternehmen in erster Linie eingesetzt, um in einem möglichst grossen Lastbereich und unter standorttypischen Klimabedingungen, mit Ausnahme extremer Klimasituationen, sichtbare Kühlturmschwaden, d.h. für die Umgebung Tropfenauswurf, Eisregen und Flächenvereisungen sowie Beschattung je nach Schwadendimension und -ausbreitung, zu vermeiden. Die Forderung der Kunden nach einer Schwadenfreiheitsgarantie auch bei extremen Betriebsbedingungen, z. B. Dampfturbinenbypassbetrieb, bzw. extremen Wetterlagen gewinnt dabei aus ökologischen Gesichtspunkten immer mehr an Bedeutung.

Die heute am häufigsten angewandte Bauart der Hybridkühltürme ist die kühlwasserseitige Reihenschaltung und die kühlluftseitige Parallelschaltung von Trockenund Nassteil (s. A. Streng: "Kombinierte Nass-/Trockenkühltürme in Zellenbauweise", BWK, Heft 5/1995, S. 218-224).

Die Auslegung erfolgt seitens der Kühlturmhersteller so, dass die Mischung aus übersättigter Kühlluft des Nassteiles mit erwärmter, d.h. getrockneter Kühlluft des Trockenteiles beim Verlassen des Kühlturmes und der Mischung mit der Umgebungsluft keine sichtbaren Abluftschwaden entstehen lässt. Dabei muss bei der Mischung von Kühlturmabluft und Umgebungsluft in der Praxis in jedem Falle ein ausreichender Sicherheitsabstand zur Sättigungslinie erhalten bleiben. Das Verhältnis von Wärmeabgabe im Trockenteil zu Wärmeabgabe im Nassteil beträgt etwa 1:5.

Aus DE 195 21 814 C1 ist ein Verfahren zur Steuerung des Luftmengenverhältnisses eines Nass-Trocken-Kühlturmes bekannt, mit dem der Energieverbrauch für die Erzeugung des den Trockenteil beaufschlagten Kühlluftstromes auf diejenige Energiemenge beschränkt wird, die im jeweiligen Betriebszustand gerade zur Einhaltung der Schwadenfreiheit benötigt wird. Das Verfahren ist gekennzeichnet durch Messung der Temperatur und relativen Luftfeuchte der Umgebungsluft und der Temperatur der Abluft sowohl des Trockenteils als auch des Nassteiles als Parameter des jeweiligen Betriebszustandes, durch Ermittlung des erforderlichen Verhältnisses der Luftmengenströme einerseits des Nassteiles und andererseits des Trockenteiles anhand dieser Parameter unter Vorgabe eines unter 100% relativer Luftfeuchte liegenden Grenzwertes und durch Steuerung des ermittelten Luftdurchsatzes durch den Trockenteil unter Beibehaltung des für die jeweilige Kühlleistung erforderlichen Luftstromes durch den Nassteil. Nachteilig an diesem Verfahren sind die aufwendige Jalusiesteuerung und die Lüftersteuerung für den Trocken- und Nassteil, welche drehzahlgeregelte oder mehrstufige Motoren bzw. Thyristormotoren erfordert und sehr teuer ist. Es erfolgt nur eine luftseitige Einflussnahme bei Garantie der Kaltwassertemperatur. Ausserdem funktioniert dieses Verfahren hinsichtlich der klimatischen Randbedingungen nur bis zum thermischen Schwadenauslegungspunkt und hinsichtlich der Auslegung nur bis zur thermischen Nennleistung. Im Dampfturbinenbypassbetrieb wird keine Schwadenfreiheit mehr erzielt.

Die Kühlturmlieferanten legen daher nach jetzigem Stand der Technik zur Sicherung der Schwadenfreiheit die Hybridkühltürme bei vorgegebenen klimatischen und kühlwasserseitigen Randbedingungen auf eine Nennlast aus, bei der eine definierte maximale Wärmeabgabe (z. B. Überlast, Dampfturbinenbypass) erfolgt. Dadurch ist aber gegenüber dem Normalbetrieb eine deutlich höhere Wärmeleistung über das Kühlsystem, d.h. den Kühlturm, an die Umgebung abzuführen.

Ein Beispiel für einen Kombiblock grosser Leistung soll das verdeutlichen:
- thermische Kühlturmleistung bei 100 % Dampfturbinenlast 220 MW
- thermische Kühlturmleistung bei Dampfturbinenbypassbetrieb 365 MW.

Damit muss der Trockenteil des Kühlturmes nach dem jetzigem Stand der Technik fast doppelt so gross ausgelegt werden, wie dies bei 100 % Dampfturbinenbetrieb notwendig wäre, um auch im Dampfbypassbetrieb schwadenfrei zu arbeiten. Das bedeutet aber eine enorme Erhöhung der Investitionskosten. Ein weiterer Nachteil besteht darin, dass eine derartige Kühlturmauslegung auch grössere Probleme für die Teillastfahrweise mit sich bringt.

Bei von 100 % Dampfturbinenlastbetrieb abweichenden Fahrweisen der Anlage ergeben sich folgende Nachteile:
- Da die Wärmeabgabe in der Trockensektion des Hybridkühlturmes im wesentlichen von der Eintrittstemperatur des Kühlwassers und den Wärmeübertragungsbedingungen auf der Luftseite abhängt, ist eine deutliche Überlastung des Trokkenteiles bei gegebener Auslegung ausgeschlossen. Durch die stark ungleichen Verhältnisse der Wärmeabgabe (Trockenteil : Nassteil = 1:5) sind bezüglich der Garantie der schwadenfreien Arbeitsweise des Hybridkühlturmes enge technische Randbedingungen vorgegeben.

Die Kaltwassertemperatur wird daher in erster Linie durch die Feuchtkugeltemperatur und die Kühlturmwärmelast Q im Nassteil bestimmt.
- Bei Überlast bzw. im Dampfbypassbetrieb kommt es durch den Anstieg der im Kondensator abzuführenden Wärme zu einer kühlwasserseitigen erhöhten Temperaturspreizung, d. h. die Eintrittstemperatur des Kühlwassers am Kühlturm (Warmwassertemperatur) steigt. Das führt bei konstanter Luftmenge zu einer deutlich erhöhten Verdunstung im Nassteil, und die Bedingungen der Schwadenfreiheit sind nicht mehr gegeben.
- Im Teillastbetrieb kommt es dagegen durch Verringerung der im Kondensator abzuführenden Wärme zu einer kühlwasserseitig verringerten Temperaturspreizung, d. h. die Eintrittstemperatur des Kühlwassers am Kühlturm (Warmwassertemperatur) sinkt. Bei nahezu konstanter Verdunstung im Nassteil geht die Aufwärmung der Luft im Trockenteil signifikant zurück, und die Bedingungen der Schwadenfreiheit sind ebenfalls nicht mehr gegeben.

### Darstellung der Erfindung

Die Erfindung versucht, diese Nachteile zu vermeiden. Ihr liegt die Aufgabe zugrunde, ein einfaches Verfahren zum Betrieb eines auf eine bestimmte Last bei vorgegebenen klimatischen Randbedingungen ausgelegten Nass-Trocken-Kühlturmes zu schaffen, mit dem auch bei Betriebsbedingungen, die vom Betrieb bei Auslegungsbedingungen abweichen, Schwadenfreiheit erreicht wird, ohne dass der Trockenteil auf den maximalen Belastungsfall ausgelegt werden muss.

Erfindungsgemäss wird dies dadurch erreicht, dass bei einem Verfahren gemäss Oberbegriff des Anspruches 1 der Kühlturm auf Nennlast (= 100 % Dampfturbinenlast) oder auf eine oberhalb dieser Nennlast, aber deutlich unterhalb der Maximallast liegenden Last ausgelegt wird und ein im Vergleich zum Betrieb bei Auslegungsbedingungen unverändert grosser Kühlwassermassenstrom über den Trockenteil des Kühlturmes abgeleitet wird, während der über den Nassteil abgeleitete Kühlwassermassenstrom im Vergleich zum Betrieb bei Auslegungsbedingungen durch Abzweigung eines Kühlwasserbypassmassenstromes reduziert wird, wobei die Grösse des Bypassmassenstromes in Abhängigkeit von den jeweiligen konkreten Betriebsbedingungen gewählt wird.

Bei erhöhter Wärmelast im Kondensator (Dampfturbinenbypassbetrieb und Überlastfahrweise) steigt die Eintrittstemperatur des Kühlwassers in den Kühlturm (Warmwassertemperatur) an. Durch die Erfindung wird nun vorteilhaft die Befeuchtung im Nassteil des Kühlturmes reduziert und dadurch die Verdunstung verringert, was zu einem Anstieg der Kaltwassertemperatur am Kühlturmaustritt führt.

Im Teillastbetrieb (Verringerung der im Kondensator abzuführenden Wärme) sinkt dagegen die Eintrittstemperatur des Kühlwassers in den Kühlturm (Warmwassertemperatur) ab. Um das Zurückgehen der Aufwärmung der Luft im Trockenteil zu kompensieren, wird erfindungsgemäss die Befeuchtung im Nassteil und damit die Verdunstung reduziert.

Die Vorteile der Erfindung bestehen somit darin, dass auch bei extremen Abweichungen vom Betrieb bei Auslegungslast mit dieser Fahrweise Schwadenfreiheit erreicht wird, ohne dass der Kühlturm auf den maximalen Belastungsfall ausgelegt werden muss. Somit können Kosten gespart werden. Mit dem erfindungsgemässen Verfahren können gute Ergebnisse in Bezug auf Schwadenfreiheit erzielt werden, wenn der Kühlturm "nur" auf 100 % Dampfturbinenlast ausgelegt ist. Mit einem demgegenüber beispielsweise um ca. 25 % vergrösserten Trockenteil sind die Bedingungen für Schwadenfreiheit in einem noch grösseren Bereich gegeben.

In den Unteransprüchen sind vorteilhafte Ausgestaltungen der Erfindung beschrieben. Sie betreffen vorwiegend mögliche Bypassschaltungen für das Kühlwasser zur Umgehung des Nassteils .

### Kurze Beschreibung der Zeichnung

In der Zeichnung sind mehrere Ausführungsbeispiele der Erfindung anhand von Nass-Trocken-Kühltürmen in Zellenbauweise, welche beispielsweise in einem kombinierten Gas- und Dampfturbinenkraftwerk eingesetzt werden, dargestellt.

Es zeigen:
- Fig. 1: einen schematischen Querschnitt einer Zelle des Nass-Trocken-Kühlturmes mit wasserseitiger Reihenschaltung von Trocken- und Nassteil mit einer ersten Ausführungsvariante der Erfindung;
- Fig. 2: ein Diagramm, in welchem die Sättigungskurven und damit das Gebiet der Schwadenfreiheit in Abhängigkeit von Luftfeuchtigkeit, Umgebungstemperatur und Betriebsbedingungen dargestellt ist;
- Fig. 3: einen schematischen Querschnitt einer Zelle des Nass-Trocken-Kühlturmes mit wasserseitiger Reihen- und Parallelschaltung von Trockenund Nassteil mit einer zweiten Ausführungsvariante der Erfindung;
- Fig. 4: einen schematischen Querschnitt einer Zelle des Nass-Trocken-Kühlturmes mit wasserseitiger Reihen- und Parallelschaltung von Trockenund Nassteil mit einer dritten Ausführungsvariante der Erfindung;
- Fig. 5: einen schematischen Querschnitt einer Zelle des Nass-Trocken-Kühlturmes mit wasserseitiger Reihen- und Parallelschaltung von Trockenund Nassteil mit einer vierten Ausführungsvariante der Erfindung.

Es sind nur die für das Verständnis der Erfindung wesentlichen Elemente gezeigt. Die Strömungsrichtung der Medien ist mit Pfeilen bezeichnet.

### Weg zur Ausführung der Erfindung

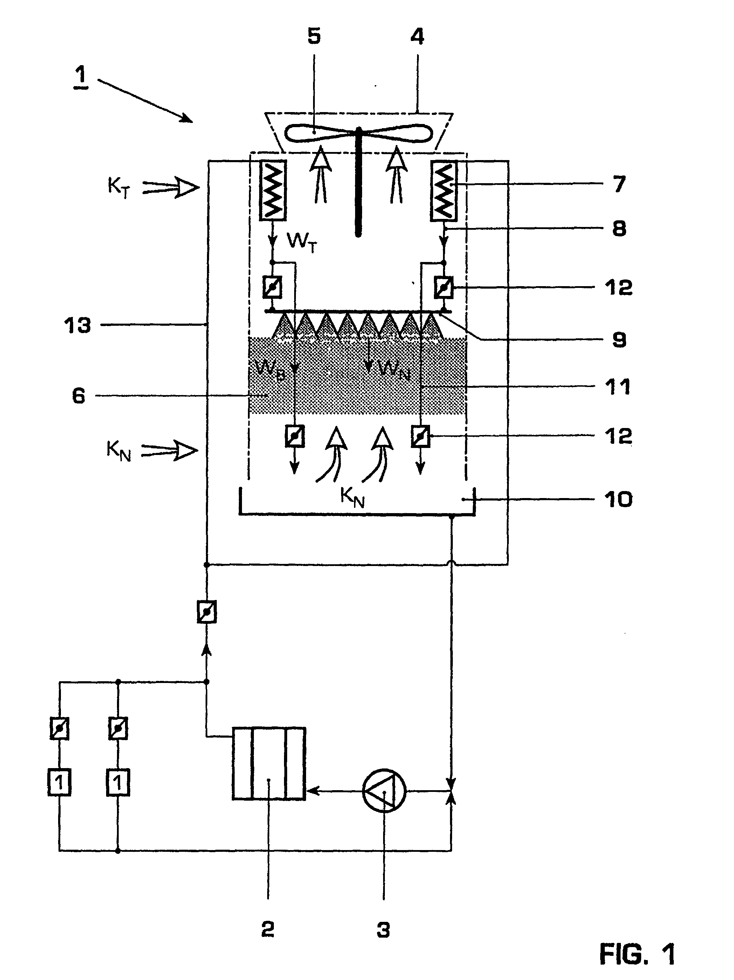

Die Erfindung wird nachfolgend anhand von Ausführungsbeispielen und der Fig. 1 bis 5 näher erläutert.

Fig. 1 zeigt in einem Querschnitt schematisch den Aufbau eines kühlluftseitig parallel und wasserseitig in Reihe geschalteten Nass-Trocken-Kühlturmes. Der Kühlturm ist für einen Nennbetrieb ausgelegt, der sich auf 100 % Dampfturbinenlast bei vorgegeben klimatischen Bedingungen bezieht.

In Fig. 1 ist nur eine Kühlturmzelle 1 abgebildet, weitere Zellen 1 sind in Fig. 1 nur angedeutet. Der Nass-Trocken-Kühlturm ist in ein nicht dargestelltes Kombikraftwerk integriert Fig. 1 zeigt neben dem Kühlturm lediglich noch den in den Kühlwasserkreislauf integrierten Kondensator 2 und die Kühlwasserpumpe 3. Der Kühlturm weist einen kreiszylindrischen Kühlturmaustritt 4 auf, in dem ein Ventilator 5, welcher den gesamten Zug im Kühlturm erzeugt, angeordnet ist. Der Nassteil 6 des Kühlturmes besteht aus Rieseleinbauten, denen das zu kühlende Wasser W_{T}, welches vorher über eine Steigleitung 13 dem Trockenteil 7 zugeführt, über diesen abgeleitet und anschliessend über eine Leitung 8 einer Verteileinrichtung 9 (Sprühbühne) zugeführt wurde, über die Verteileinrichtung 9 von oben her aufgegeben wird. Die Rieseleinbauten werden von unten her im Gegenstrom zum Kühlwasser W_{N} mit einem Kühlluftstrom K_{N} beaufschlagt. Das aus dem Nassteil 6 abtropfende gekühlte Wasser W_{N} sammelt sich in einem Becken 10 am Boden des Kühlturmes, von dem aus es anschliessend erneut dem Kraftwerkskreislauf zugeführt wird. Der Trockenteil 7 wird aus Wärmetauschern gebildet und befindet sich oberhalb der Verteileinrichtung 9 für den Nassteil 6. Der vom Ventilator 5 angesaugte Kühlluftstrom K_{T} vermischt sich mit dem Kühlluftstrom K_{N}, welcher zuvor noch über einen nicht dargestellten Tropfenabscheider geleitet wurde. Anschliessend wird die aufgeheizte Luft am Kühlturmaustritt in die Atmosphäre ausgetragen.

Bei Nennlast (100 % Dampfturbinenlast bei vorgegebenen klimatischen Bedingungen ) wird der Nass-Trocken-Kühlturm wie oben beschrieben betrieben, es gibt keine Probleme bezüglich Schwadenfreiheit, da der Kühlturm auf diese Bedingungen ausgelegt ist.

Bei von dieser Auslegungslast extrem abweichenden Betriebsbedingungen wird nun erfindungsgemäss folgende Fahrweise gewählt:

Ein im Vergleich zum Nennlastbetrieb unverändert grosser Kühlwassermassenstrom W_{T} wird dabei über den Trockenteil 7 des Kühlturmes abgeleitet, während der über den Nassteil 6 abgeleitete Kühlwassermassenstrom W_{N} im Vergleich zum Nennlastbetrieb mittels eines Kühlwasserbypassmassenstromes W_{B} reduziert wird, wobei die Grösse des Bypassmassenstromes W_{B} in Abhängigkeit von den jeweiligen konkreten Betriebsbedingungen gewählt wird. Aus diesem Grunde zweigt von der Leitung 8, d. h. zwischen Trockenteil 7 und Nassteil 6, eine Bypassleitung 11 für den Kühlwasserbypassmassenstrom W_{B} ab. Zur Regelung der Grösse der Wassermassenströme sind in den Leitungen 8, 11, 13 Ventile 12 angeordnet, die manuell oder motorisch betätigt werden können. Im Extremfall kann der Bypasswassermassenstrom W_{B} dem kompletten Kühlwasserstrom entsprechen.

Durch diese Fahrweise gelingt es, aufgrund der verringerten Befeuchtung im Nassteil (im Vergleich zum Betrieb bei 100 % Dampfturbinenlast) die Verdunstung zu reduzieren. Dies führt dazu, dass sowohl bei Überlastfahrweise, als auch im Dampfturbinenbypass- und Teillastbetrieb die Schwadenfreiheit garantiert werden kann und dass, obwohl der Kühlturm nur auf 100 % Dampfturbinenlast bei klimatisch vorgegebenen Bedingungen und nicht auf Maximallast bei vorgegebenen klimatischen Bedingungen ausgelegt ist. Auf diese Weise können grosse Investitionskosten gespart werden.

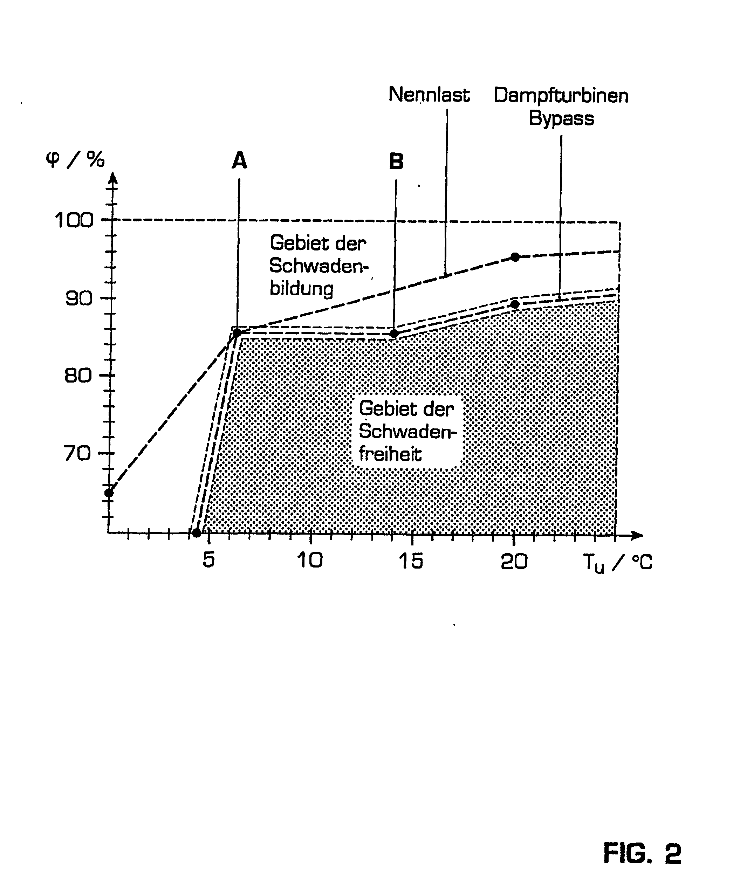

Fig. 2 zeigt ein Diagramm, in welchem das Gebiet der Schwadenfreiheit in Abhängigkeit von der Umgebungstemperatur T_{U}, der Luftfeuchtigkeit ϕ und den Betriebsbedingungen für einen Kühlturm dargestellt ist, dessen thermische Nennlast bei 100 % Dampfturbinenlast 220 MW (⇒ Auslegungspunkt des Trockenteiles für Schwadenfreiheit) beträgt und dessen thermische Maximallast bei Dampfturbinenbypassbetrieb 365 MW beträgt. Der Kühlturm ist ein Fixpunkt-Nass-Trocken-Kühlturm, welcher mit einer konstanten Luftmenge beaufschlagt wird. Er besteht bei diesem Ausführungsbeispiel aus 5 Zellen. Der Kühlwassermassenfluss beträgt 4,2 m³/s, die Kaltwassertemperatur ist >15°C. Mit A ist der Garantiepunkt für Schwadenfreiheit (6 °C Umgebungstemperatur und 85 % relative Luftfeuchtigkeit) bezeichnet, mit B der Umschaltpunkt, bei dem der Kühlwasserstrom über den Nassteil reduziert werden muss.

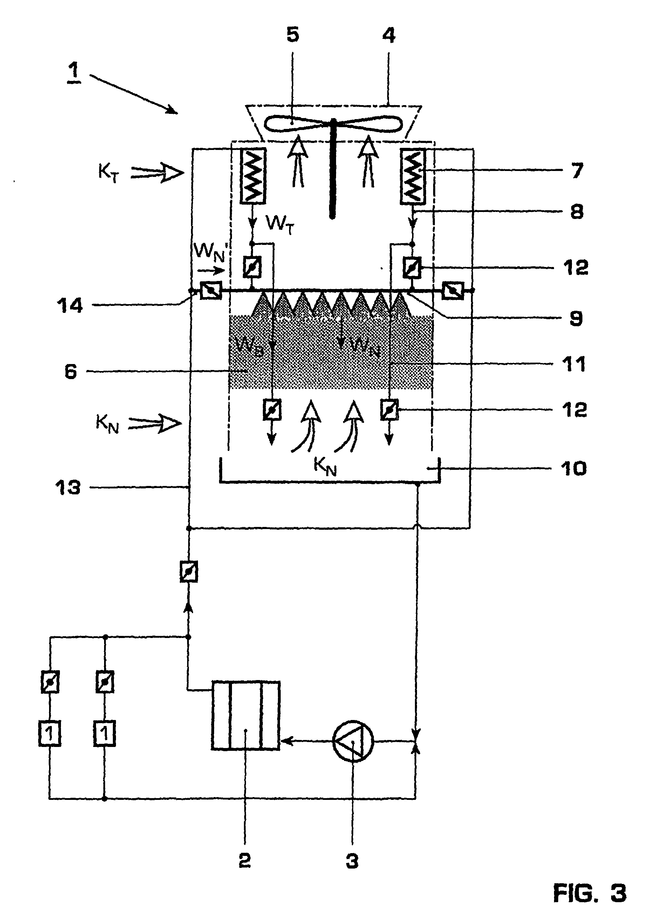

Fig. 3 zeigt eine weiteres Ausführungsbeispiel der Erfindung. Der Nass-Trocken-Kühlturm unterscheidet sich vom Ausführungsbeispiel nach Fig. 1 nur dadurch, dass der Trockenteil 7 und der Nassteil 6 nicht mehr rein in Reihe geschaltet sind, sondern vom Steigrohr 13 zweigt hier eine Leitung (Abzweigung 14) ab, über welche ein Teil des Kühlwassers (Kühlwassermassenteilstrom W_{N'}) am Trockenteil 7 vorbeigeführt wird. Bei dieser Ausführungsvariante werden beispielsweise 40% des gesamten Kühlwassers für den Trockenteil 7 und 60% direkt für den Nassteil 6 vorgesehen. Im Nennbetrieb wird der über den Trockenteil 7 abgelaufene Teilstrom W_{T} mit dem abgezweigten Teilstrom W_{N'} gemischt und danach gemeinsam als W_{N} dem Nassteil 6 zugeführt.

Bei von den Auslegungsbedingungen extrem abweichenden Betriebsbedingungen wird wiederum die erfindungsgemässe kühlwasserseitige Fahrweise gewählt, indem der Nassteil 6 zum Teil gebypasst wird. Dazu wird von dem vom Trockenteil 7 kommenden Wasserstrom W_{T}, welcher über die Leitung 8 der Verteileinrichtung 9 und damit dem Nassteil 6 zugeführt wird, vorher ein bestimmter Anteil W_{B} abgezweigt und über die Leitung 11 am Nassteil 6 vorbei abgeführt. Der über die Leitung 14 gehende Kühlwassermassenteilstrom W_{N'} wird mit dem vom Trockenteil 7 kommenden verbleibenden Teilstrom W_{T} gemischt und dann über die Verteileinrichtung 9 versprüht. Wie im oben beschriebenen ersten Ausführungsbeispiel wird durch diese Fahrweise die Verdunstung reduziert aufgrund der verringerten Beaufschlagung im Nassteil (im Vergleich zum Betrieb bei 100 % Dampfturbinenlast), so dass sowohl bei Überlastfahrweise, als auch im Dampfturbinenbypassund im Teillastbetrieb Schwadenfreiheit garantiert werden kann.

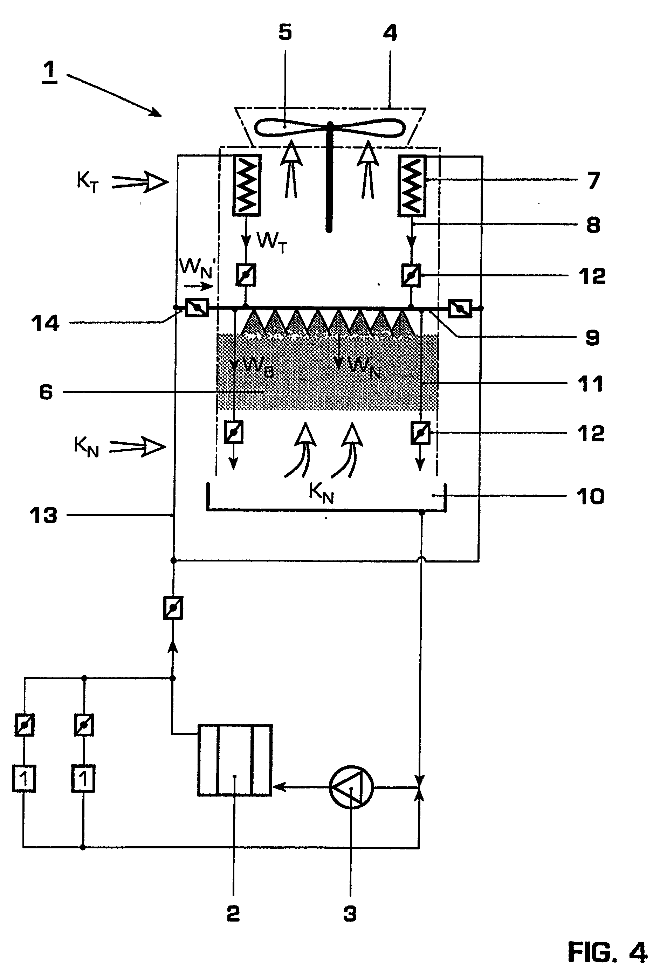

Bei dem in Fig. 4 dargestellten Ausführungsbeispiel sind der Trockenteil 7 und der Nassteil 6 des Kühlturmes ebenfalls wie in Fig. 3 wasserseitig in einer kombinierten Reihen- und Parallelschaltung (= zumindestens teilweise wasserseitige Reihenschaltung von Trockenteil 7 und Nassteil 6) verbunden. Die Bypassleitung 11 zweigt hier aber nicht von der Leitung 8 ab, sondern von der Leitung 14, in welcher der noch ungekühlte Kühlwassermassenstrom W_{N}' strömt. d. h. der Bypasswassermassenstrom W_{B} hat im Vergleich zum in Fig. 3 dargestellten Ausführungsbeispiel eine höhere Temperatur und damit ist dieser kühlwasserseitige Eingriff effektiver als bei Fig. 3.

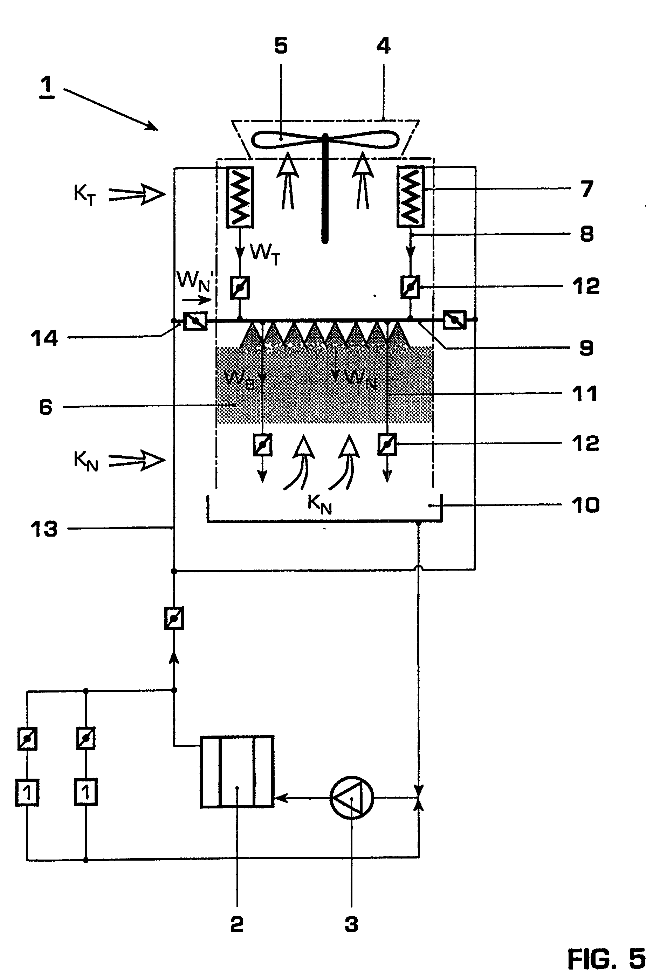

Fig. 5 zeigt schliesslich eine Ausführungsvariante der Erfindung, bei der im Unterschied zu Fig. 4 der Kühlwasserbypassmassenstrom W_{B} erst nach der Mischung der beiden Ströme W_{N}' und W_{T} entnommen wird. Welche der möglichen Varianten angewendet wird, hängt von den jeweiligen konkreten Bedingungen ab.

Ein weiteres Ausführungsbeispiel bezieht sich auf den Betrieb eines Kühlturmes, welcher auf eine Last ausgelegt ist, die grösser als die Nennlast (100 % Dampfturbinenlast), aber deutlich kleiner als die Maximallast ist, so dass der Trockenteil 7 etwas vergrössert ist, beispielsweise um 25 % im Vergleich zu einer Auslegung auf Nennlast. Hier wird bei einem von den Auslegungsbedingungen abweichenden Betrieb zusätzlich zu den oben beschrieben verschiedenen Varianten des Bypassens vom Nassteil der Gesamtkühlwassermassenstrom im Vergleich zum Betrieb bei Auslegungsbedingungen reduziert, wobei im Dampfbypass- und Überlastbetrieb das Kühlwasser über den Trockenteil 7 und den Nassteil 6 geleitet wird und im Teillastbetrieb das Kühlwasser nur über den Trockenteil 7 geleitet wird. Dadurch kann auch bei diesen Betriebsbedingungen Schwadenfreiheit erzielt werden. Auch in diesem Falle werden immer noch im Vergleich zur bisher üblichen Auslegung des Kühlturmes auf Maximallast erhebliche Investitionskosten gespart.

Selbstverständlich ist die Erfindung nicht auf die hier gezeigten Ausführungsbeispiele beschränkt. Die Erfindung ist selbstverständlich auch bei Kühltürmen mit luftseitiger Reihenschaltung anwendbar. Ausserdem ist die Erfindung auch im Teillastbetrieb kombinierbar mit einer Reduktion des in den Kühlturm eintretenden Wassermassenstromes bzw. einer Reduktion des in den Kühlturm eintretenden Wassermassenstromes bei gleichzeitiger Abschaltung einer bestimmten Zellenzahl und gegebenenfalls einer zusätzlichen Reduktion des Luftmassenstromes.

### Bezugszeichenliste

- 1: Kühlturmzelle
- 2: Kondensator
- 3: Kühlwasserpumpe
- 4: Kühlturmaustritt
- 5: Ventilator
- 6: Nassteil
- 7: Trockenteil
- 8: Wasserleitung zwischen Pos. 7 und 9
- 9: Verteileinrichtung
- 10: Sammelbecken
- 11: Bypassleitung
- 12: Ventile
- 13: Steigrohr
- 14: Abzweigung
- W_{N}: Kühlwassermassenstrom Nassteil (gesamt)
- W_{N'}: Kühlwassermassenteilstrom Nassteil (direkt)
- WT: Kühlwassermassenstrom Trockenteil
- W_{B}: Kühlwasserbypassmassenstrom Nassteil
- K_{N}: Kühlluftstrom Nassteil
- K_{T}: Kühlluftstrom Trockenteil
- T_{U}: Umgebungstemperatur
- ϕ: Luftfeuchtigkeit
- A: Garantiepunkt für Schwadenfreiheit
- B: Umschaltpunkt

## Patentansprüche

1. Verfahren zum Betrieb eines auf eine bestimmte Last bei vorgegebenen klimatischen Randbedingungen ausgelegten Nass-Trocken-Kühlturmes mit einer zumindestens teilweisen wasserseitigen Reihenschaltung von Trockenteil (7) und Nassteil (6) bei von der Auslegungslast abweichenden Betriebsbedingungen (Dampfbypass-, Teillast-, Überlastbetrieb) zwecks Einhaltung der Schwadenfreiheit, **dadurch gekennzeichnet, dass** der Kühlturm auf Nennlast (= 100 % Dampfturbinenlast) oder auf eine oberhalb dieser Nennlast, aber deutlich unterhalb der Maximallast liegenden Last ausgelegt wird und ein im Vergleich zum Betrieb bei Auslegungsbedingungen unverändert grosser Kühlwassermassenstrom (W_{T}) über den Trockenteil (7) des Kühlturmes abgeleitet wird, während der über den Nassteil (6) abgeleitete Kühlwassermassenstrom (W_{N}) im Vergleich zum Betrieb bei Auslegungsbedingungen durch Abzweigung eines Kühlwasserbypassmassenstromes (W_{B}) reduziert wird, wobei die Grösse des Bypassmassenstromes (W_{B}) in Abhängigkeit von den jeweiligen konkreten Betriebsbedingungen gewählt wird.

2. Verfahren nach Anspruch 1, **dadurch gekennzeichnet, dass** bei einer reinen wasserseitigen Reihenschaltung von Trockenteil (7) und Nassteil (6) der Kühlwasserbypassmassenstrom (W_{B}) dem Kühlwassermassenstrom (W_{T}) zwischen dem Trockenteil (7) und dem Nassteil (6) entnommen wird.

3. Verfahren nach Anspruch 1, **dadurch gekennzeichnet, dass** bei einer kombinierten wasserseitigen Reihen- und Parallelschaltung von Trockenteil (7) und Nassteil (6) mit einer Abzweigung (14) zwecks beliebiger Aufteilung des einerseits über den Trockenteil (7) und andererseits über den Nassteil (6) gehenden Kühlwassermassenstromes (W_{T}, W_{N'}), wobei das vom Trockenteil (7) kommende Wasser (W_{T}) mit dem über die Abzweigung (14) dem Nassteil (6) direkt zuzuführenden Wasser (W_{N'}) gemischt und anschliessend diese Mischung (W_{N}) im Nassteil (6) versprüht wird, der Kühlwasserbypassmassenstrom (W_{B}) dem Kühlwassermassenteilstrom (W_{T}) zwischen dem Trockenteil (7) und dem Nassteil (6) entnommen wird.

4. Verfahren nach Anspruch 1, **dadurch gekennzeichnet, dass** bei einer kombinierten wasserseitigen Reihen- und Parallelschaltung von Trockenteil (7) und Nassteil (6) mit einer Abzweigung (14) zwecks beliebiger Aufteilung der einerseits über den Trockenteil (7) und andererseits über den Nassteil (6) gehenden Kühlwassermassenteilströme (W_{T}, W_{N'}), wobei das vom Trockenteil (7) kommende Wasser (W_{T}) mit dem über die Abzweigung (14) dem Nassteil (6) direkt zuzuführenden Wasser (W_{N'}) gemischt und anschliessend diese Mischung (W_{N}) im Nassteil (6) versprüht wird, der Kühlwasserbypassmassenstrom (W_{B}) dem Kühlwassermassenteilstrom (W_{N'}) vor seiner Mischung mit dem Kühlwassermassenteilstrom (W_{T}) entnommen wird.

5. Verfahren nach Anspruch 1, **dadurch gekennzeichnet, dass** bei einer kombinierten wasserseitigen Reihen- und Parallelschaltung von Trockenteil (7) und Nassteil (6) mit einer Abzweigung (14) zwecks beliebiger Aufteilung des einerseits über den Trockenteil (7) und andererseits über den Nassteil (6) gehenden Kühlwassermassenstromes (W_{T}, W_{N'}), wobei das vom Trockenteil (7) kommende Wasser (W_{T}) mit dem über die Abzweigung (14) dem Nassteil (6) direkt zuzuführenden Wasser (W_{N'}) gemischt und anschliessend diese Mischung (W_{N}) im Nassteil (6) versprüht wird, der Kühlwasserbypassmassenstrom (W_{B}) nach der Mischung der beiden Kühlwassermassenteilströme (W_{N'}, W_{T}) dem Kühlwassermassenstrom (W_{N}) entnommen wird.

6. Verfahren nach einem der Ansprüche 1 bis 5, **dadurch gekennzeichnet, dass** der Gesamtkühlwassermassenstrom im Vergleich zum Betrieb bei Auslegungsbedingungen reduziert wird.

## Claims

1. Method for operating a wet-dry cooling tower which is designed for a specific load under predetermined climatic boundary conditions and has an at least partial water-side series connection of dry part (7) and wet part (6) under operating conditions which deviate from the design load (steam bypass, partial load, overload operation) in order to maintain freedom from vapours, **characterized in that** the cooling tower is designed for rated load (= 100% steam turbine load) or a load which lies above this rated load but considerably below the maximum load, and a large cooling-water mass flow (W_{T}), which is unchanged compared to operation under design conditions, is discharged via the dry part (7) of the cooling tower, while the cooling-water mass flow (W_{N}) which is discharged via the wet part (6) is reduced compared to operation under design conditions as a result of a cooling-water bypass mass flow (W_{B}) being branched off, the level of the bypass mass flow (W_{B}) being selected as a function of the particular, specific operating conditions.

2. Method according to Claim 1, **characterized in that**, in the case of a purely water-side series connection of dry part (7) and wet part (6), the cooling-water bypass mass flow (W_{B}) is removed from the cooling-water mass flow (W_{T}) between the dry part (7) and the wet part (6).

3. Method according to Claim 1, **characterized in that**, with a combined water-side series and parallel connection of dry part (7) and wet part (6) with a branch (14) in order to achieve any desired division of the cooling-water mass flow (W_{T}, W_{N'}) which passes via the dry part (7), on the one hand, and via the wet part (6), on the other hand, the water (W_{T}) coming from the dry part (7) being mixed with the water (W_{N'}) which is to be fed to the wet part (6) directly via the branch (14) and this mixture (W_{N}) then being atomized in the wet part (6), the cooling-water bypass mass flow (W_{B}) is removed from the cooling-water partial mass flow (W_{T}) between the dry part (7) and the wet part (6).

4. Method according to Claim 1, **characterized in that**, with a combined water-side series and parallel connection of dry part (7) and wet part (6) with a branch (14) in order to achieve any desired division of the cooling-water partial mass flows (W_{T}, W_{N'}) passing via the dry part (7), on the one hand, and via the wet part (6), on the other hand, the water (W_{T}) coming from the dry part (7) being mixed with the water (W_{N'}) which is to be fed directly to the wet part (6) via the branch (14), and then this mixture (W_{N}) being atomized in the wet part (6), the cooling-water bypass mass flow (W_{B}) is removed from the cooling-water partial mass flow (W_{N'}) before it is mixed with the cooling-water partial mass flow (W_{T}).

5. The method as claimed in Claim 1, **characterized in that**, given a combined water-side series and parallel connection of dry part (7) and wet part (6) with a branch (14) in order to achieve any desired division of the cool-water mass flow (W_{T}, W_{N'}) passing via the dry part (7), on the one hand, and via the wet part (6), on the other hand, the water (W_{T}) coming from the dry part (7) being mixed with the water (W_{N'}) which is to be fed directly to the wet part (6) via the branch (14) and this mixture (W_{N}) then being atomized in the wet part (6), the cooling-water bypass mass flow (W_{B}) is removed from the cooling-water mass flow (W_{N}) after the two cooling-water partial mass flows (W_{N'}, W_{T}) have been mixed.

6. Method according to one of Claims 1 to 5, **characterized in that** the total cooling-water mass flow is reduced compared to operation under design conditions.

## Revendications

1. Procédé de fonctionnement d'une tour de refroidissement sèche/humide dimensionnée pour une charge déterminée dans des conditions aux limites climatiques prédéterminées, avec un montage en série, au moins en partie du côté de l'eau, d'une partie sèche (7) et d'une partie humide (6) dans des conditions de fonctionnement s'écartant de la charge de dimensionnement (marche en dérivation de vapeur, à charge partielle, en surcharge) en vue de maintenir l'absence de buée, **caractérisé en ce que** la tour de refroidissement est dimensionnée pour une charge nominale (= 100 % de charge de turbine à vapeur) ou pour une charge supérieure à cette charge nominale mais nettement inférieure à la charge maximale, et un courant massique d'eau de refroidissement (W_{T}) de valeur inchangée par rapport au fonctionnement dans les conditions de dimensionnement est dévié à travers la partie sèche (7) de la tour de refroidissement, tandis que le courant massique d'eau de refroidissement (W_{N}) dévié à travers la partie humide (6) est réduit par rapport au fonctionnement dans les conditions de dimensionnement par dérivation d'un courant massique de dérivation d'eau de refroidissement (W_{B}), dans lequel la valeur du courant massique de dérivation (W_{B}) est choisie en fonction des conditions concrètes actuelles de fonctionnement.

2. Procédé suivant la revendication 1, **caractérisé en ce que**, avec un montage purement en série du côté de l'eau d'une partie sèche (7) et d'une partie humide (6), le courant massique de dérivation d'eau de refroidissement (W_{B}) est prélevé dans le courant

3. Procédé suivant la revendication 1, **caractérisé en ce que**, avec un montage en série et en parallèle combiné du côté de l'eau d'une partie sèche (7) et d'une partie humide (6) avec une dérivation (14) pour le partage arbitraire du courant massique d'eau de refroidissement (W_{T}, W_{N'}) circulant d'une part dans la partie sèche (7) et d'autre part dans la partie humide (6), dans lequel l'eau (W_{T}) venant de la partie sèche (7) est mélangée à l'eau (W_{N'}) à introduire directement dans la partie humide (6) par la dérivation (14) et ce mélange (W_{N}) est ensuite pulvérisé dans la partie humide (6), le courant massique de dérivation d'eau de refroidissement (W_{B}) est prélevé dans le courant partiel massique d'eau de refroidissement (W_{T}) entre la partie sèche (7) et la partie humide (6).

4. Procédé suivant la revendication 1, **caractérisé en ce que**, avec un montage en série et en parallèle combiné du côté de l'eau d'une partie sèche (7) et d'une partie humide (6) avec une dérivation (14) pour le partage arbitraire des courants partiels massiques d'eau de refroidissement (W_{T}, W_{N'}) circulant d'une part dans la partie sèche (7) et d'autre part dans la partie humide (6), dans lequel l'eau (W_{T}) venant de la partie sèche (7) est mélangée à l'eau (W_{N'}) à introduire directement dans la partie humide (6) par la dérivation (14) et ce mélange (W_{N}) est ensuite pulvérisé dans la partie humide (6), le courant massique de dérivation d'eau de refroidissement (W_{B}) est prélevé dans le courant partiel massique d'eau de refroidissement (W_{N'}) avant son mélange avec le courant partiel massique d'eau de refroidissement (W_{T}).

5. Procédé suivant la revendication 1, **caractérisé en ce que**, avec un montage en série et en parallèle combiné du côté de l'eau d'une partie sèche (7) et d'une partie humide (6) avec une dérivation (14) pour le partage arbitraire du courant massique d'eau de refroidissement (W_{T}, W_{N'}) circulant d'une part dans la partie sèche (7) et d'autre part dans la partie humide (6), dans lequel l'eau (W_{T}) venant de la partie sèche (7) est mélangée à l'eau (W_{N'}) à introduire directement dans la partie humide (6) par la dérivation (14) et ce mélange (W_{N}) est ensuite pulvérisé dans la partie humide (6), le courant massique de dérivation d'eau de refroidissement (W_{B}) est prélevé dans le courant massique d'eau de refroidissement (W_{N}) après le mélange des deux courants partiels massiques d'eau de refroidissement (W_{N'}, W_{T}).

6. Procédé suivant l'une quelconque des revendications 1 à 5, **caractérisé en ce que** le courant massique total d'eau de refroidissement est réduit par rapport au fonctionnement dans les conditions du dimensionnement.
